# EUROPEAN PATENT SPECIFICATION

(11) **EP 3 530 034 B1**
(45) Date of publication and mention of the grant of the patent: **29.09.2021**
(21) Application number: 16919006.3
(22) Date of filing: 18.10.2016
(51) Int. Cl.: H04W 48/16, H04L 9/32, H04L 29/06, H04W 8/00, H04L 29/08, H04W 12/086, H04W 84/18

(54) **ACCESSION CONTROL FOR NETWORK NODES**
ZUGANGSKONTROLLE FÜR NETZWERKKNOTEN
CONTRÔLE D'AFFILIATION POUR NOEUDS DE RÉSEAU

(43) Date of publication of application: 28.08.2019
(73) Proprietor: Nokia Technologies Oy, 02610 Espoo (FI)
(72) Inventor: ROENNOW, Troels F., Cambridge Cambridgeshire CB2 9BG (GB); MARTIN-LÓPEZ, Enrique, Cambridge Cambridgeshire CB4 3DN (GB); LI, Hongwei, Cambridge Cambridgeshire CB4 1RY (GB)
(74) Representative: Laine IP Oy
(86) International application number: PCT/FI2016/050732
(87) International publication number: WO 2018/073482

(56) References cited:
- WO-A1-2016/057548
- US-A1- 2003 055 894
- US-A1- 2010 031 318
- US-A1- 2015 244 690
- US-A1- 2016 012 424
- US-A1- 2016 028 552
- US-A1- 2016 217 532
- US-A1- 2016 254 910
- US-A1- 2016 254 910
- Shehar Bano ET AL: "SoK: Consensus in the Age of Blockchains", , 15 April 2015 (2015-04-15), XP055513744, Retrieved from the Internet: URL:https://pdfs.semanticscholar.org/919e/ 32847097416aada92dff7c8274cd9ca55582.pdf [retrieved on 2018-10-09]
- Trent Mcconaghy ET AL: "BigchainDB: A Scalable Blockchain Database", , 8 June 2016 (2016-06-08), XP055340139, Retrieved from the Internet: URL:https://www.bigchaindb.com/whitepaper/ bigchaindb-whitepaper.pdf

## Description

### FIELD

The present invention relates to accession control of network nodes, and in particular managing accession to a private device network.

### BACKGROUND

The Internet of Things (IoT) envisions things, people and cloud services getting connected via internet to enable new use cases and business models. On consumer side, IoT aims at increasing user's convenience, improving their lifestyle and reducing their expenses; and on the business side, it aims at increasing sales and reducing expenses.

However, IoT faces some challenges, such as regards connectivity and security. In terms of connectivity, a variety of connectivity standards are required to meet different application needs. In terms of security, user's privacy must be protected. Management of devices and connectivity permissions between devices in an IoT network may be cumbersome, especially when the number of devices in the network is high. <1a>

### SUMMARY

The invention is defined by the features of the independent claims. Some specific embodiments are defined in the dependent claims.

US2003/055894 discloses a mechanism for representing trust in a distributed peer-to-peer networks. A peer, wishing to join a peer group, locates a current member and then request to join the peer group. A collective set of current members may reject or accept the request to join. A rendezvous peer may maintain dynamic indexes, which are created as the peer group community grows and more peers join.

US2016/254910 addresses revocation of a cryptographic key in a distributed ledger system.

### BRIEF DESCRIPTION OF THE DRAWINGS

FIGURE 1 illustrates a method in accordance with at least some embodiments of the present invention;
FIGURE 2 illustrates an example system capable of supporting at least some embodiments of the present invention;
FIGURE 3 illustrates a blockchain in accordance with at least some embodiments of the present invention;
FIGURE 4 illustrates a method of a vote accession control procedure for a blockchain network;
FIGURE 5 illustrates an example node network in accordance with at least some embodiments of the present invention, and
FIGURE 6 illustrates an apparatus in accordance with at least some embodiments of the present invention.

### DETAILED DESCRIPTION

Connections within a network of IoT nodes, such as wirelessly connected devices in the household, conventionally need to be established individually. For example, a Bluetooth speaker needs to be paired with a smartphone. The status and the history of pairings may be cumbersome to manage. For example, when buying a new smartphone, and bringing it as part of home network, it needs to be configured separately to pair with the rest of the devices, such as a Bluetooth speaker, or a smart TV. Each device keeps its own record of paired devices. Such record may include permissions for devices that were meant to be paired just temporarily, but such cases may be difficult to identify after some time in an ever-increasing list with potentially cryptic device identifiers. Management of pairings between nodes is not only cumbersome, but it may also lead to security threats, since a user administrating the network may be unaware of undesirable pairings of certain nodes with intruding devices.

There is now provided an improved accession control solution suitable for IoT node networks. An ever increasing number of devices connected to a network via different protocols, may be managed by utilizing a blockchain-based solution. Devices, such as household IoT devices, may form and become nodes of a private peer-to-peer network in which network state information is shared between the nodes.

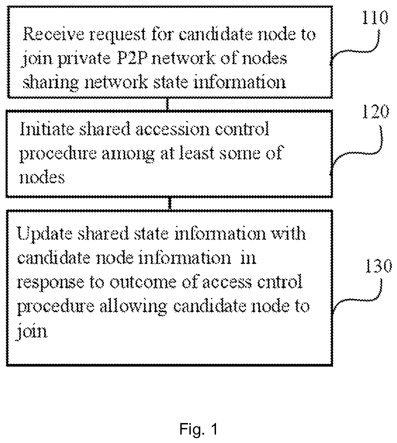

FIGURE 1 illustrates a method according to some embodiments. A request is received 110 for a new candidate node wishing to join a private peer-to-peer (P2P) network formed by blockchain nodes sharing common network state information. Sharing of common network state information is carried out by storing at least some of the state information of the network in a blockchain ledger comprised by each of the nodes. A private network refers generally to an access-limited or closed network, for example a family/household network, a company network, a workplace/worksite network, a machine-to-machine (M2M) network, a social group network, a community network, or a society network. A shared accession control procedure is initiated 120 among at least some of the nodes in response to the request. The accession control procedure refers generally to a procedure for controlling accession to one or more nodes or devices forming a network. The accession control procedure may be shared, or common, procedure when more than one of the network nodes is involved in the procedure, in at least some accession control situations. The procedure may be completely shared or common when all existing nodes are involved in the decision making. The shared network state information of the network in the ledger is updated 130 with information on the candidate node in response to the accession control procedure allowing the candidate node to join the network, i.e. when such outcome of the accession control procedure is detected.

The network state information comprises device identifiers and information on allowed connections between at least some of the nodes. The network state information may list all the devices and their possible connections via different connectivity channels. These features facilitate addition of devices to the network without manually having to setup individual pairings. Furthermore, specific pairings for different communication channels can be avoided. Instead of having a pairing record in each device, it is possible to manage all the pairings between the devices via a single network state information record. A more convenient control panel or interface of network management and connectivity is enabled, which becomes more vital as the number of the devices in the network increases. Since more than one already device is involved in the accession control procedure, a malicious party would need to hack into more than one device to take control. Since ttransactions may be verified and confirmed by other nodes participating in the network, need for a central authority may be avoided.

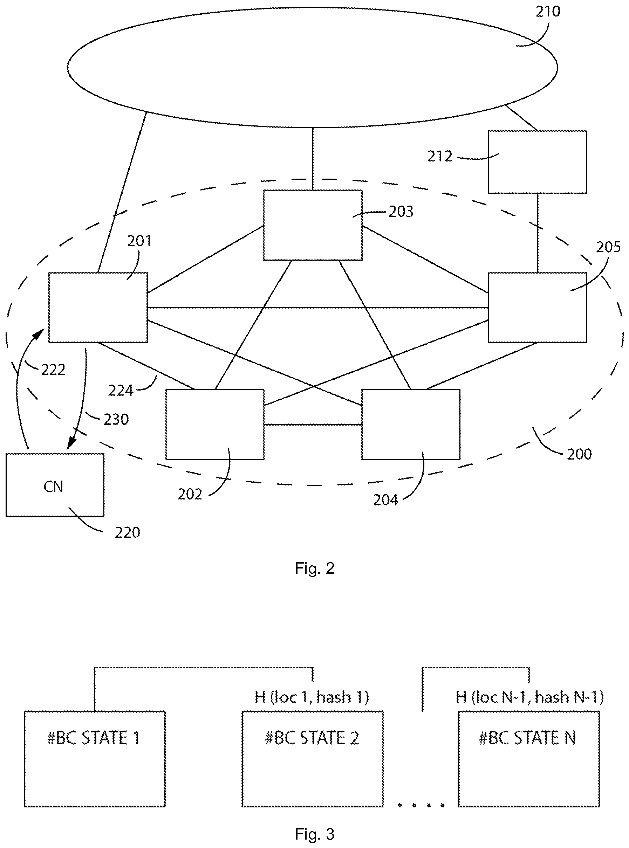

FIGURE 2 illustrates an example system in accordance with at least some embodiments of the present invention. A private peer-to-peer network 200, referred to herein for the sake of brevity as "the network", is formed by nodes 201, 202, 203, 204, and 205. All or at least some of the nodes may be IoT devices. The nodes may comprise one or more user devices, such as a tablet computer, smartphone, laptop computer, set-top box or other suitable electronic device. The system may further comprise a management node, a hub, relay or other kind of intermediate device 212 for connecting a node to further networks or services 210, such as another distributed or centralized computing system or IoT cloud service. These nodes are mutually addressable in a suitable way, for example, they may be connected to an internet protocol, IP, network. Messages released into the IP network with a recipient address are routed by the network to the recipient node identified by the recipient address. IP is not the only suitable networking technology used, for example, other peer-to-peer networking models are also suitable.

Figure 2 also illustrates a candidate node CN 220 wishing to join the network. The CN sends 222 to one of the network nodes 201 a request for joining the network. It is to be noted that in some embodiments more than one, or all the nodes may get information on the CN and the request may be received by those nodes. On the basis of outcome of the shared accession control procedure, a response is sent 230 to the candidate node.

The network 200 formed by nodes 201, 202, 203, 204, and 205 is a blockchain network. A blockchain is generally a distributed peer-to-peer computing architecture where the network nodes execute and record the same transactions, which are grouped into blocks. Only one block can be added at a time, and every block contains a mathematical proof, such as a proof-of-work code, that verifies that it follows in sequence from the previous block. In this way, the blockchain's replicated database is kept in consensus across the whole network. Individual user interactions are secured by strong cryptography. Nodes that maintain and verify the network may be incentivized by mathematically enforced economic incentives coded into the protocol. This kind of distributed computing architecture is a suitable primitive to manage connectivity permissions. It can work in different ways, as well as in different scales. For instance, the blockchain network can work at global level. In contrast, a private blockchain can be defined to operate at the household network scale, which may require close to none computational overhead. Apart from keeping an immutable, comprehensive record of events, to be conveniently acted upon, it offers security in a complex network by accommodating consensus algorithms that are mathematically hard to corrupt. Further example embodiments are illustrated below in connection with blockchain-based system.

The network state information shared by the nodes 201 to 205 may store all the transactions and history carried out in the network. The network state information is stored in a blockchain ledger. Each node comprises the ledger whose content is in sync with other ledgers. The nodes may validate and commit transactions in order to reach consensus. Each node may have their own copy of the ledger and is permission-controlled, so participants see only appropriate transactions. The state of the blockchain may thus be synchronized across all the blockchain nodes. The ledger may include a list of the IoT devices, with their medium access control (MAC) addresses or other suitable device identifiers, and the allowed connections between them for each communication channel. The ledger is tamper-proof and cannot be manipulated by malicious actors because it doesn't exist in any single location, and man-in-the-middle attacks cannot be staged because there is no single thread of communication that can be intercepted. Application of blockchain technology and the ledger also enables a way to track the unique history of individual nodes in the network. Blockchains could also enable smart devices to become independent agents, autonomously conducting a variety of transactions.

Nodes 201, 202, 203, 204, and 205 thus maintain a blockchain. This means that each node stores a segment of the blockchain, wherein the segment may comprise the entire blockchain or a part of the blockchain. With reference to FIGURE 3, the blockchain is an ordered sequence of blocks. When a new block is established, it is added to the blockchain as a most recent established block. A block comprises a time-stamped batch of transactions representing the state of the block at the time. A block may further comprise a hash pointer H with location indicator 'loc' and hash value 'hash' to a prior block, which immediately precedes the block in the blockchain, linking thus the blocks together.

When the blockchain network is used, transactions are performed involving the resources that are managed by the network. Transactions performed since establishment of the most recent established block are included in the next block, that is, the next block in the sequence of blocks. Changes in resource ownership take the form of transactions, wherein a transaction may comprise an identifier of a new owner, that is the recipient, of the resource, together with a cryptographic signature of the previous owner, that is the sender, such that malicious attackers cannot re-assign resources they do not own. Cryptographic signatures may be used to identify nodes also during the accession control procedure. Such cryptographic signature may be generated using a private key of a private key-public key pair. Validity of the cryptographic signature may be verified using the public key, while the signature can only be generated using the private key. While the public key may be freely shared with no reduction in security, the private key is closely kept by the owner.

In some embodiments, the group of nodes comprises one or more administrator nodes. The administrator node(s) carry out the accession control procedure and determine if the candidate node CN 220 may join the network. This may involve prompting a user of an administrator device and/or checking an accession control parameter.

For example, nodes 202, 203 and 204 may be administrator nodes. Upon receiving the request 222, the receiving node 201 may select one of the administrator nodes randomly to decide if the candidate node may be added to join the network. The randomly selected node 202 is then requested to decide, and on the basis of the response 224 of the node, accession is allowed or denied for the candidate node.

The selection of the deciding node can be effectively implemented by different means like using a random number generator, using a Proof-of-Work (PoW) protocol, or a Proof-of-Stake (PoS) protocol. In one example, the request 222 propagates through the network 200. The administration nodes, in response to the request, write a transaction to their next proposed block, which includes their response to the request. The next block to be added to the blockchain is chosen amongst the blocks proposed by each of the administrator nodes using, for instance, a PoW or PoS protocol. PoW effectively performs a random choice of a node due to the non-deterministic discovery of solutions to a hard mathematical problem. Alternatively, a centralized random number generator could be used for this matter. Finally, a PoS would effectively select a node, but instead of randomly, based on which node has the most interest in acting honestly.

The accession control procedure may be a distributed consensus procedure, for example between the blockchain administrator nodes 202, 203, and 204. In some embodiments, the accession control procedure comprises carrying out a vote procedure amongst the administrator nodes. In response to the accession control procedure allowing the candidate node to join the private peer-to-peer network, the shared network state information of the network in the ledger is updated with information on the candidate node.

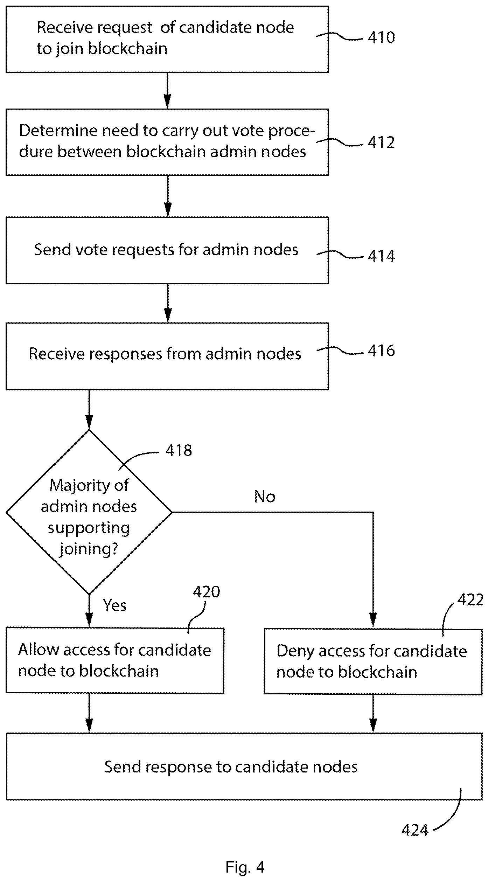

FIGURE 4 illustrates a vote accession control procedure for a blockchain network. In response to a request 410 of candidate node, such as the node 220, to join the blockchain, a node receiving the request, such as the node 201, determines an appropriate accession control procedure. In the present example a vote procedure is required 412 amongst at least some of the administrator nodes of the network. The request of the candidate node to join may be sent or forwarded to the administrator nodes, or a specific vote request may be generated and sent 414 to the administrator nodes.

Administrator nodes respond 416 with indication for or against the candidate node joining. Based on the administrator node responses the procedure, e.g. represented by the node that has received the request 222, determines 418 if majority of the administrator nodes support the joining. If yes, accession is allowed 420 for the candidate node to join the blockchain. If not, accession is denied 422 for the candidate node. After defining the outcome of accession control procedure, a response is sent 424 to the candidate node, or another entity that has submitted the request for the candidate node to join.

The vote procedure requires multiple confirmations from different devices, but it is worth doing, for instance, when administrator rights are proposed for a device. In such case, the addition of the new block poses a security threat and it is worth spending some time accepting the block from different devices. One could imagine a situation where a malicious party has taken control of one administrator node. Use of the majority vote of administrator nodes can counteract this, and prevent the malicious party to take control of the whole network, which would require hacking the majority of administrator nodes.

In case the accession request is received from an administrator node, the candidate node may be allowed to join the network node as non-administrator node. This is quick and convenient, for instance, when the new node is just a general IoT device with no administrator rights or with no processing capabilities. In such case the security threat can be considered low enough for a majority vote not being needed.

In case the request is for adding the candidate node as administrator node in the network, the accession control procedure comprises requesting user confirmation by at least two administration nodes. This further enables to make the network more robust against attacks on single devices. In an embodiment, multi-signature transactions are required for adding and removing administrator nodes.

Various other accession control functions and parameters may be applied in the network and the accession control procedure, and stored as part of the network state information. Time limitations may be applied for allowed connections, e.g. for given time period for guest devices. Network usage may be controlled and limited e.g. for specified nodes.

It is to be appreciated that the above embodiments are just some examples on how accession control may be applied, and various replacements and/or additions may be applied. For example, there may be further different accession levels and priorities among the nodes.

As also illustrated in FIGURE 3, and also step 130 of FIGURE 1, after deciding on allowing the candidate node to join the network, a new blockchain block may be added. The new block may comprise updated blockchain network state information, comprising information on the new node and the allowed connections for the new node. To establish a next block, the network state information may be broadcast into the network 200. Broadcasting here refers to a dissemination method suitable for the context, which will cause the transactions to be communicated to the nodes of the system in general. The updated network state information may be verified with verification information. Verification information may comprise an identity of a verification node that verified the transaction. A node establishing the next block may be known as a miner node. A miner node may compile a set of transactions, which it receives from the broadcasts, for the next block, and search for a proof, such as a proof-of-work code that covers all the transactions in the set of transactions for the next block. For example, the proof-of-work code may be a numerical value, with which the contents of the next block, that is, the set of transactions, hashes to a value that is less than a threshold. More generally, there may be a target area of an output space of a hash function, wherein the target space need not be in the low end of the target space. The smaller the target area is, the more difficult it is to discover the proof-of-work. Once a miner discovers the proof, it can publish the block, which other nodes of the system will then add to the blockchain as the new most recent established block.

Once a new block is established, the blockchain becomes longer. A transaction is considered the more reliable, the larger the number of blocks established since the block where the transaction is comprised. This is so, since transactions are hashed into the chain of blocks, and discrepancies in the blockchain are resolved as the blockchain gets longer. In detail, maliciously modifying a transaction in a block far down the chain would involve re-doing the work of finding proofs for all subsequent blocks, since the input to the hash function for the block comprising the transaction would be changed, causing the resulting hash value, with the proof in that block, to no longer be disposed in the desired area in the output space of the hash function.

A set of operations or transactions may be defined to change the state of the network. Some examples of available operations include: addition/removal of a device as node of the network, issue/revoke administrator rights for a node to operate on the network state, add/remove pairing between devices through a communication channel. For example, the node 201 may initiate updating the network state information to define removal of a node in response to receiving a removal request is received.

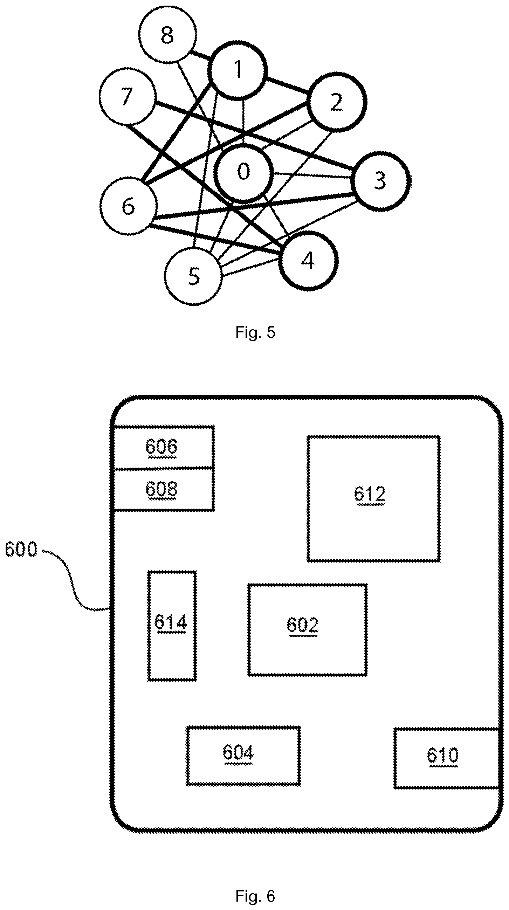

An example of an updated blockchain network of devices, such as IoT devices, is illustrated below with reference to FIGURE 5. All the circles in the diagram enclose the device number to indicate the device they refer to. Blockchain nodes 1 to 4 are represented with bold circles, whereas the rest of the devices are represented with non-bold circles. The nodes 5 to 7 may act as lightweight blockchain clients in a similar manner to lightweight wallets in the Bitcoin protocol. Lightweight clients can interact with the network normally, the only difference being not taking part directly in the consensus process (no mining or executing proofs of work). In another embodiment these devices may not belong to the blockchain at all. Non-bold lines represent first type of connections, such as Wi-Fi connections between devices, whereas bolded lines represent second type of connections, such as Bluetooth connections.

For example, user purchases a new smartphone, represented as device 8 with MAC *76-52-CA-43-CD-B5,* which is connected to a Wi-Fi network. A notification is pushed to all the admin nodes. Using a suitable user interface e.g. via the new smartphone or one of the admin nodes, the accession control procedure may gather the following information:

*Would you like to add Smartphone_name2 [76-52-CA-43-CD-B5] to your IoT network?Make it a node of the blockchain network? Give administrator rights to the blockchain network? Which devices do you want to connect to it via Wi-Fi?* (Answer can be ALL, NONE, or it can be selected from the list of IoT devices.) *Which devices do you want to connect to it via Bluetooth?* (Answer can be ALL, NONE, or it can be selected from the list of IoT devices).

Annex 1 illustrates an example of the updated blockchain state information in the form of list. Answering the above questions from an admin device, such as device number 4 and answering "YES", "NO", "NONE", "Laptop_namel") causes sending the corresponding instructions to change the state of the blockchain: Device(*76-52-CA-43-CD-B5,* action = "ADD") Pair(*76-52-CA-43-CD-B5,* 13-44-96-72-BA-3C, type = "Bluetooth", action = "ADD").

As a consequence, the updated block number 17 with new node 8 is proposed and may be broadcast to the blockchain network. The list makes the network aware of the role (being nodes of the blockchain or not) and administrator rights (marked with an asterisk) of each individual device. The block also includes the hash pointer to previous block number 16. The accession control procedure may be continued according to the applied decision-making method, such as one of the embodiments illustrated above. If the node is allowed to join, the blockchain is updated with the new block 17 including the new smartphone.

Above-illustrated features may be applied in wide variety of applications. An example includes private user or user group networks of end-user devices, such as mobile phones, or other communication devices, auxiliary devices, wearables, home entertainment devices etc. Some other example applications include the private network being established between devices for smart manufacturing (e.g. asset tracking, intelligent sensors, flow optimization, safety, etc), health care, work machine fleet monitoring&control (traffic&production control and asset tracking, predictive maintenance, safety, etc), automotive (infotainment, telemetry, predictive maintenance), community automation, or building automation.

Figure 6 illustrates an example apparatus capable of supporting at least some embodiments of the present invention. Illustrated is a device 600, which may comprise a communications device arranged to operate as a node in a private peer-to-peer network, such as an IoT device arranged to operate as blockchain node. The device may be arranged to carry out at least some of the embodiments related to accession control to such network illustrated above. The device may include one or more controllers configured to carry out operations in accordance with at least some of the embodiments illustrated above, such as the method illustrated in connection with Figures 1 and 4. For example, the device may operate as the candidate node 220, a node receiving the access-control related request 201, an administrator node 202, 203, 204, or some other device related to accession control of and/or operating in the private network.

Comprised in the device 600 is a processor 602, which may comprise, for example, a single- or multi-core processor wherein a single-core processor comprises one processing core and a multi-core processor comprises more than one processing core. The processor 602 may comprise more than one processor. The processor may comprise at least one application-specific integrated circuit, ASIC. The processor may comprise at least one field-programmable gate array, FPGA. The processor may be means for performing method steps in the device. The processor may be configured, at least in part by computer instructions, to perform actions.

The device 600 may comprise memory 604. The memory may comprise random-access memory and/or permanent memory. The memory may comprise at least one RAM chip. The memory may comprise solid-state, magnetic, optical and/or holographic memory, for example. The memory may be at least in part accessible to the processor 602. The memory may be at least in part comprised in the processor 602. The memory 604 may be means for storing information. The memory may comprise computer instructions that the processor is configured to execute. When computer instructions configured to cause the processor to perform certain actions are stored in the memory, and the device in overall is configured to run under the direction of the processor using computer instructions from the memory, the processor and/or its at least one processing core may be considered to be configured to perform said certain actions. The memory may be at least in part comprised in the processor. The memory may be at least in part external to the device 600 but accessible to the device. Network state information, as well as control parameters affecting operations in the private network, such as the accession control procedure for the blockchain network, may be stored in one or more portions of the memory and used to control communications of the apparatus in the private network.

The device 600 may comprise a transmitter 606. The device may comprise a receiver 608. The transmitter and the receiver may be configured to transmit and receive, respectively, information in accordance with at least one cellular or non-cellular standard. The transmitter may comprise more than one transmitter. The receiver may comprise more than one receiver. The transmitter and/or receiver may be configured to operate in accordance with global system for mobile communication, GSM, wideband code division multiple access, WCDMA, long term evolution, LTE, IS-95, wireless local area network, WLAN, Ethernet and/or worldwide interoperability for microwave access, WiMAX, standards, for example. The device 600 may comprise a near-field communication, NFC, transceiver 610. The NFC transceiver may support at least one NFC technology, such as NFC, Bluetooth, Wibree or similar technologies.

The device 600 may comprise user interface, UI, 612. The UI may comprise at least one of a display, a keyboard, a touchscreen, a vibrator arranged to signal to a user by causing the device to vibrate, a speaker and a microphone. A user may be able to operate the device via the UI, for example to accept incoming telephone calls, to originate telephone calls or video calls, to browse the Internet, to manage digital files stored in the memory 604 or on a cloud accessible via the transmitter 606 and the receiver 608, or via the NFC transceiver 610, and/or to play games.

The device 600 may comprise or be arranged to accept a user identity module 614. The user identity module may comprise, for example, a subscriber identity module, SIM, card installable in the device 600. The user identity module 614 may comprise information identifying a subscription of a user of device 600. The user identity module 614 may comprise cryptographic information usable to verify the identity of a user of device 600 and/or to facilitate encryption of communicated information and billing of the user of the device 600 for communication effected via the device 600.

The processor 602 may be furnished with a transmitter arranged to output information from the processor, via electrical leads internal to the device 600, to other devices comprised in the device. Such a transmitter may comprise a serial bus transmitter arranged to, for example, output information via at least one electrical lead to memory 604 for storage therein. Alternatively to a serial bus, the transmitter may comprise a parallel bus transmitter. Likewise the processor may comprise a receiver arranged to receive information in the processor, via electrical leads internal to the device 600, from other devices comprised in the device 600. Such a receiver may comprise a serial bus receiver arranged to, for example, receive information via at least one electrical lead from the receiver 608 for processing in the processor. Alternatively to a serial bus, the receiver may comprise a parallel bus receiver.

The device 600 may comprise further devices not illustrated in Figure 6. For example, the device may comprise at least one digital camera. Some devices may comprise a back-facing camera and a front-facing camera. The device may comprise a fingerprint sensor arranged to authenticate, at least in part, a user of the device. In some embodiments, the device lacks at least one device described above. For example, some devices may lack the NFC transceiver 610 and/or the user identity module 614.

The processor 602, the memory 604, the transmitter 606, the receiver 608, the NFC transceiver 610, the UI 612 and/or the user identity module 614 may be interconnected by electrical leads internal to the device 600 in a multitude of different ways. For example, each of the aforementioned devices may be separately connected to a master bus internal to the device, to allow for the devices to exchange information. However, as the skilled person will appreciate, this is only one example and depending on the embodiment various ways of interconnecting at least two of the aforementioned devices may be selected without departing from the scope of the present invention.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

The verbs "to comprise" and "to include" are used in this document as open limitations that neither exclude nor require the existence of also un-recited features. Furthermore, it is to be understood that the use of "a" or "an", that is, a singular form, throughout this document does not exclude a plurality.

### INDUSTRIAL APPLICABILITY

At least some embodiments of the present invention find industrial application in communications.

### ACRONYMS LIST

- ASIC: Application-specific integrated circuit
- DC: Direct current
- FPGA: Field-programmable gate array
- GSM: Global system for mobile communication
- LTE: Long term evolution
- M2M: Machine-to-machine
- NFC: Near-field communication
- P2P: Peer-to-peer
- PoS: Proof-of-stake
- PoW: Proof-of-work
- UI: User interface
- WCDMA: Wideband code division multiple access,
- WiMAX: Worldwide interoperability for microwave access
- WLAN: Wireless local area network

### ANNEX 1: BLOCKCHAIN STATE EXAMPLE

# BLOCKCHAIN STATE = 17
Hash pointer to previous block: H(location = *loc16*, hash = 9452ee65a...83e91b5)
## IoT devices
### Blockchain nodes
0. Router_name1 [12-34-56-78-9A-BC]^{∗}
1. Laptop_name1 [13-44-96-72-BA-3C]^{∗}
2. Laptop_name2 [33-45-C6-38-A3-35]
3. Tablet_name1 [...]^{∗}
4. Smartphone_name1 [...]^{∗}
### Rest of devices
5. TV_name1 [...]
6. Speakers_namel [...]
7. Smartwatch_namel [...]
**8. Smartphone_name2 [*76-52-CA-43-CD-B5*]**
## Wi-Fi connections
0 -> {1, 2, 3, 4, 5, **8**}
1 -> {5}
2 -> {5}
3 -> {5}
4 -> {5}
5 -> {}
**8** -> {}
## Bluetooth connections
1 -> {2, 6, **8**}
2 -> {6}
3 -> {6, 7}
4 -> {6, 7}
5 -> {}
6 -> {}
7 -> {}
**8** -> {}

## Claims

1. An apparatus (600) for accession control in a private peer-to-peer network (200) of blockchain nodes sharing network state information, the apparatus (600) comprising:
- means for receiving (110) a request of a candidate node (220) to join the private peer-to-peer network (200) of blockchain nodes (201, 202, 203, 204, 205) sharing network state information, wherein the network state information is stored in a blockchain ledger that is comprised by each of the nodes (201, 202, 203, 204, 205) and comprises device identifiers and information on allowed connections between at least some of the nodes,
- means for initiating (120) a shared accession control procedure among at least some of the nodes in response to the request, and
- means for updating (130) the shared network state information of the network in the ledger with information on the candidate node in response to the shared accession control procedure allowing the candidate node to join the private peer-to-peer network.

2. The apparatus of claim 1, wherein the at least some of the nodes comprises one or more administrator nodes (202, 203, 204).

3. The apparatus of claim 2, wherein the apparatus further comprises means for selecting one of the administrator nodes (202, 203, 204) randomly to decide if the candidate node (220) may be added to join the network.

4. The apparatus of claim 2 or 3, the accession control procedure comprising carrying out a vote procedure amongst the administrator nodes (202, 203, 204), and
the apparatus is configured to allow (420) the candidate node to join the network in response to majority of the administrator nodes supporting the joining.

5. The apparatus according to any one of claims 2 to 4, wherein the request is for adding the candidate node (220) as an administrator node in the network, whereby the accession control procedure comprises requesting user confirmation from at least two administration nodes.

6. The apparatus of any preceding claim, wherein the apparatus comprises a public ciphering key and a private ciphering key for generating digital signatures to identify the apparatus at least in connection with the accession control procedure.

7. The apparatus of any preceding claim, wherein the apparatus is configured to initiate updating the network state information to define removal of a node for which a removal request is received.

8. The apparatus of any preceding claim, wherein the apparatus is configured to connect an internet of things network and at least some of the nodes are internet of things nodes.

9. A method, carried out by an apparatus for accession control in a private peer-to-peer network of blockchain modes sharing network state information, the method comprising:
- receiving (110) a request of a candidate node (220) to join the private peer-to-peer network (200) of blockchain nodes (201, 202, 203, 204, 205) sharing network state information, wherein the network state information is stored in a blockchain ledger that is comprised by each of the nodes (201, 202, 203, 204, 205) and comprises device identifiers and information on allowed connections between at least some of the nodes,
- initiating (120) a shared accession control procedure among at least some of the nodes in response to the request, and
- updating (130) the shared network state information of the private peer-to-peer network in the ledger with information on the candidate node in response to the shared accession control procedure allowing the candidate node to join the private peer-to-peer network.

10. The method of claim 9, wherein the at least some of the nodes comprises one or more administrator nodes (202, 203, 204).

11. The method of claim 10, wherein one of the administrator nodes (202, 203, 204) is selected randomly to decide if the candidate node (220) may be added to join the network.

12. The method of any of claims 9-11, wherein in response to the shared accession control procedure allowing the candidate node (220) to join the network as a new node, a new blockchain block is added in the blockchain ledger, the new blockchain block comprising updated blockchain network state information, including information on the new node and the allowed connections for the new node.

13. A computer program comprising instructions for causing an apparatus (600), when the instructions are executed in a processor (602) of the apparatus, to perform at least the following:
- receive (110) a request of a candidate node (220) to join a private peer-to-peer network (200) of blockchain nodes (201, 202, 203, 204, 205) sharing network state information, wherein the network state information is stored in a blockchain ledger that is comprised by each of the nodes (201, 202, 203, 204, 205) and comprises device identifiers and information on allowed connections between at least some of the nodes,
- initiate (120) a shared accession control procedure among at least some of the nodes in response to the request, and
- update (130) the shared network state information of the network in the ledger with information on the candidate node in response to the accession control procedure allowing the candidate node to join the network.

## Patentansprüche

1. Einrichtung (600) für eine Zugriffssteuerung in einem privaten Peer-to-Peer-Netzwerk (200) von Blockkettenknoten, die Netzwerkzustandsinformationen gemeinsam verwenden, wobei die Einrichtung (600) Folgendes umfasst:
- Mittel zum Empfangen (110) einer Anforderung von einem Knotenkandidaten (220) zum Beitreten zum privaten Peer-to-Peer-Netzwerk (200) von Blockkettenknoten (201, 202, 203, 204, 205), die Netzwerkzustandsinformationen gemeinsam verwenden, wobei die Netzwerkzustandsinformationen in einem Blockkettenhauptbuch gespeichert sind, das in jedem der Knoten (201, 202, 203, 204, 205) umfasst ist und Vorrichtungskennungen und Informationen über erlaubte Verbindungen zwischen mindestens einigen der Knoten umfasst,
- Mittel zum Initiieren (120) einer gemeinsam verwendeten Zugriffssteuerprozedur unter mindestens einigen der Knoten in Reaktion auf die Anforderung und
- Mittel zum Aktualisieren (130) der gemeinsam verwendeten Netzwerkzustandsinformationen des Netzwerks im Hauptbuch mit Informationen über den Knotenkandidaten in Reaktion darauf, dass die gemeinsam verwendete Zugriffssteuerprozedur es dem Knotenkandidaten erlaubt, dem privaten Peer-to-Peer-Netzwerk beizutreten.

2. Einrichtung nach Anspruch 1, wobei die mindestens einigen Knoten einen oder mehrere Administratorknoten (202, 203, 204) umfasst.

3. Einrichtung nach Anspruch 2, wobei die Einrichtung ferner Mittel zum zufälligen Auswählen von einem der Administratorknoten (202, 203, 204) umfasst, um zu entscheiden, ob der Knotenkandidat (220) hinzugefügt werden kann, um dem Netzwerk beizutreten.

4. Einrichtung nach Anspruch 2 oder 3, wobei die Zugriffssteuerprozedur das Umsetzen einer Abstimmprozedur unter den Administratorknoten (202, 203, 204) umfasst und die Einrichtung dazu ausgelegt ist, in Reaktion darauf dass eine Mehrheit der Administratorknoten das Beitreten unterstützt, es dem Knotenkandidaten zu erlauben (420), dem Netzwerk beizutreten.

5. Einrichtung nach einem der Ansprüche 2 bis 4, wobei sich die Anforderung auf das Hinzufügen des Knotenkandidaten (220) als einen Administratorknoten im Netzwerk bezieht, wodurch die Zugriffssteuerprozedur das Anfordern einer Benutzerbestätigung von mindestens zwei Administrationsknoten umfasst.

6. Einrichtung nach einem der vorhergehenden Ansprüche, wobei die Einrichtung zum Erzeugen von digitalen Signaturen, um die Einrichtung mindestens in Verbindung mit der Zugriffssteuerprozedur zu identifizieren, einen öffentlichen Chiffrierschlüssel und einen privaten Chiffrierschlüssel umfasst.

7. Einrichtung nach einem der vorhergehenden Ansprüche, wobei die Einrichtung dazu ausgelegt ist, eine Aktualisierung der Netzwerkzustandsinformationen zu initiieren, um die Entfernung eines Knotens zu definieren, für den eine Entfernungsanforderung empfangen wird.

8. Einrichtung nach einem der vorhergehenden Ansprüche, wobei die Einrichtung dazu ausgelegt ist, ein Internet-der-Dinge-Netzwerk zu verbinden, und mindestens einige der Knoten Internet-der-Dinge-Knoten sind.

9. Verfahren, das von einer Einrichtung für eine Zugriffssteuerung in einem privaten Peer-to-Peer-Netzwerk von Blockkettenmodi, die Netzwerkzustandsinformationen gemeinsam verwenden, umgesetzt wird, wobei das Verfahren Folgendes umfasst:
- Empfangen (110) einer Anforderung von einem Knotenkandidaten (220) zum Beitreten zum Peer-to-Peer-Netzwerk (200) von Blockkettenknoten (201, 202, 203, 204, 205), die Netzwerkzustandsinformationen gemeinsam verwenden, wobei die Netzwerkzustandsinformationen in einem Blockkettenhauptbuch gespeichert sind, das in jedem der Knoten (201, 202, 203, 204, 205) umfasst ist und Vorrichtungskennungen und Informationen über erlaubte Verbindungen zwischen mindestens einigen der Knoten umfasst,
- Initiieren (120) einer gemeinsam verwendeten Zugriffssteuerprozedur unter mindestens einigen der Knoten in Reaktion auf die Anforderung und
- Aktualisieren (130) der gemeinsam verwendeten Netzwerkzustandsinformationen des privaten Peer-to-Peer-Netzwerks im Hauptbuch mit Informationen über den Knotenkandidaten in Reaktion darauf, dass die gemeinsam verwendete Zugriffssteuerprozedur es dem Knotenkandidaten erlaubt, dem privaten Peer-to-Peer-Netzwerk beizutreten.

10. Verfahren nach Anspruch 9, wobei die mindestens einigen Knoten einen oder mehrere Administratorknoten (202, 203, 204) umfasst.

11. Verfahren nach Anspruch 10, wobei einer der Administratorknoten (202, 203, 204) zufällig ausgewählt wird, um zu entscheiden, ob der Knotenkandidat (220) hinzugefügt werden kann, um dem Netzwerk beizutreten.

12. Verfahren nach einem der Ansprüche 9-11, wobei in Reaktion darauf, dass die gemeinsam verwendete Zugriffssteuerprozedur es erlaubt, dass der Knotenkandidat (220) dem Netzwerk als ein neuer Knoten beitritt, ein neuer Blockkettenblock im Blockkettenhauptbuch hinzugefügt wird, wobei der neue Blockkettenblock aktualisierte Blockkettennetzwerkzustandsinformationen umfasst, die Informationen über den neuen Knoten und die erlaubten Verbindungen für den neuen Knoten beinhalten.

13. Computerprogramm, das Anweisungen zum Bewirken, dass eine Einrichtung (600), wenn die Anweisungen in einem Prozessor (602) der Einrichtung ausgeführt werden, mindestens Folgendes durchführt, umfasst:
- Empfangen (110) einer Anforderung von einem Knotenkandidaten (220) zum Beitreten zu einem privaten Peer-to-Peer-Netzwerk (200) von Blockkettenknoten (201, 202, 203, 204, 205), die Netzwerkzustandsinformationen gemeinsam verwenden, wobei die Netzwerkzustandsinformationen in einem Blockkettenhauptbuch gespeichert sind, das in jedem der Knoten (201, 202, 203, 204, 205) umfasst ist und Vorrichtungskennungen und Informationen über erlaubte Verbindungen zwischen mindestens einigen der Knoten umfasst,
- Initiieren (120) einer gemeinsam verwendeten Zugriffssteuerprozedur unter mindestens einigen der Knoten in Reaktion auf die Anforderung und
- Aktualisieren (130) der gemeinsam verwendeten Netzwerkzustandsinformationen des Netzwerks im Hauptbuch mit Informationen über den Knotenkandidaten in Reaktion darauf, dass die Zugriffssteuerprozedur es dem Knotenkandidaten erlaubt, dem Netzwerk beizutreten.

## Revendications

1. Appareil (600) pour le contrôle d'adhésion dans un réseau poste à poste privé (200) de nœuds de chaîne de blocs partageant des informations d'état de réseau, l'appareil (600) comprenant :
- des moyens pour recevoir (110) une demande d'un nœud candidat (220) de rejoindre le réseau poste à poste privé (200) de nœuds de chaîne de blocs (201, 202, 203, 204, 205) partageant des informations d'état de réseau, dans lequel les informations d'état de réseau sont stockées dans un grand livre de chaîne de blocs qui est constitué par chacun des nœuds (201, 202, 203, 204, 205) et comprennent des identifiants de dispositif et des informations sur des connexions autorisées entre au moins une partie des noeuds,
- des moyens pour initier (120) une procédure de contrôle d'adhésion partagée parmi au moins une partie des nœuds en réponse à la demande, et
- des moyens pour mettre à jour (130) les informations d'état de réseau partagées du réseau dans le grand livre avec des informations sur le nœud candidat en réponse à l'autorisation, par la procédure de contrôle d'adhésion partagée, au nœud candidat de rejoindre le réseau poste à poste privé.

2. Appareil de la revendication 1, dans lequel l'au moins une partie des nœuds comprend un ou plusieurs nœuds administrateurs (202, 203, 204).

3. Appareil de la revendication 2, dans lequel l'appareil comprend en outre des moyens pour sélectionner un des nœuds administrateurs (202, 203, 204) de manière aléatoire pour décider si le nœud candidat (220) peut être ajouté afin de rejoindre le réseau.

4. Appareil de la revendication 2 ou 3, où la procédure de contrôle d'adhésion comprend la réalisation d'une procédure de vote parmi les nœuds administrateurs (202, 203, 204), et
l'appareil est configuré pour permettre (420) au nœud candidat de rejoindre le réseau en réponse à la prise en charge de l'adhésion par la majorité des nœuds administrateurs.

5. Appareil selon l'une quelconque des revendications 2 à 4, dans lequel la demande concerne l'ajout du nœud candidat (220) en tant que nœud administrateur dans le réseau, ce qui permet à la procédure de contrôle d'adhésion de comprendre la demande d'une confirmation de l'utilisateur provenant d'au moins deux nœuds administrateurs.

6. Appareil de l'une des revendications précédentes, dans lequel l'appareil comprend une clé de chiffrement publique et une clé de chiffrement privée pour générer des signatures numériques afin d'identifier l'appareil au moins en relation avec la procédure de contrôle d'adhésion.

7. Appareil de l'une des revendications précédentes, dans lequel l'appareil est configuré pour initier une mise à jour des informations d'état de réseau pour définir le retrait d'un nœud pour lequel une demande de retrait est reçue.

8. Appareil de l'une des revendications précédentes, dans lequel l'appareil est configuré pour se connecter à un réseau de l'internet des objets, et au moins une partie des nœuds sont des nœuds de l'internet des objets.

9. Procédé, réalisé par un appareil pour le contrôle d'adhésion dans un réseau poste à poste privé de modes de chaîne de blocs partageant des informations d'état de réseau, le procédé comprenant :
- la réception (110) d'une demande d'un nœud candidat (220) de rejoindre le réseau poste à poste privé (200) de nœuds de chaîne de blocs (201, 202, 203, 204, 205) partageant des informations d'état de réseau, dans lequel les informations d'état de réseau sont stockées dans un grand livre de chaîne de blocs qui est constitué par chacun des nœuds (201, 202, 203, 204, 205) et comprennent des identifiants de dispositif et des informations sur des connexions autorisées entre au moins une partie des noeuds,
- l'initiation (120) d'une procédure de contrôle d'adhésion partagée parmi au moins une partie des nœuds en réponse à la demande, et
- la mise à jour (130) des informations d'état de réseau partagées du réseau poste à poste privé dans le grand livre avec des informations sur le nœud candidat en réponse à l'autorisation, par la procédure de contrôle d'adhésion partagée, au nœud candidat de rejoindre le réseau poste à poste privé.

10. Procédé de la revendication 9, dans lequel l'au moins une partie des nœuds comprend un ou plusieurs nœuds administrateurs (202, 203, 204).

11. Procédé de la revendication 10, dans lequel un des nœuds administrateurs (202, 203, 204) est sélectionné de manière aléatoire pour décider si le nœud candidat (220) peut être ajouté afin de rejoindre le réseau.

12. Procédé de l'une quelconque des revendications 9 à 11, dans lequel, en réponse à l'autorisation, par la procédure de contrôle d'adhésion partagée, au nœud candidat (220) de rejoindre le réseau en tant que nouveau nœud, un nouveau bloc de chaîne de blocs est ajouté dans le grand livre de chaîne de blocs, le nouveau bloc de chaîne de blocs comprenant des informations d'état de réseau de chaîne de blocs mises à jour, comportant des informations sur le nouveau nœud et les connexions autorisées pour le nouveau noeud.

13. Programme informatique comprenant des instructions pour amener un appareil (600), lorsque les instructions sont exécutées dans un processeur (602) de l'appareil, à effectuer au moins ce qui suit :
- recevoir (110) une demande d'un nœud candidat (220) de rejoindre un réseau poste à poste privé (200) de nœuds de chaîne de blocs (201, 202, 203, 204, 205) partageant des informations d'état de réseau, dans lequel les informations d'état de réseau sont stockées dans un grand livre de chaîne de blocs qui est constitué par chacun des nœuds (201, 202, 203, 204, 205) et comprennent des identifiants de dispositif et des informations sur des connexions autorisées entre au moins une partie des noeuds,
- initier (120) une procédure de contrôle d'adhésion partagée parmi au moins une partie des nœuds en réponse à la demande, et
- mettre à jour (130) les informations d'état de réseau partagées du réseau dans le grand livre avec des informations sur le nœud candidat en réponse à l'autorisation, par la procédure de contrôle d'adhésion, au nœud candidat de rejoindre le réseau.
